# EUROPEAN PATENT SPECIFICATION

(11) **EP 3 882 737 B1**
(45) Date of publication and mention of the grant of the patent: **27.04.2022**
(21) Application number: 20164731.0
(22) Date of filing: 20.03.2020
(51) Int. Cl.: G05D 16/20

(54) **FLUID PRESSURE CONTROL APPARATUS**
FLUIDDRUCKSTEUERVORRICHTUNG
APPAREIL DE COMMANDE DE PRESSION DE FLUIDE

(43) Date of publication of application: 22.09.2021
(73) Proprietor: Siemens Aktiengesellschaft, 80333 München (DE)
(72) Inventor: Strauch, Piotr, 76761 Rülzheim (DE)

(56) References cited:
- US-A1- 2005 279 408
- US-A1- 2007 074 865
- US-A1- 2016 252 912

## Description

The invention relates to a fluid pressure control apparatus. The fluid pressure control apparatus of concern herein provides a regulated fluid pressure output that is equal to a pressure set point value applied to the control apparatus. To that end, the apparatus may comprise a proportional solenoid valve operatively connected between a fluid inlet and a fluid outlet and a pressure sensor fluidically coupled to the fluid outlet on one side and on the other side to the surrounding atmosphere. An electronic controller generates and outputs a control signal to the solenoid valve in dependence on a control deviation between the measured or sensed pressure and the pressure set point value.

The mentioned pressure apparatuses or systems may be used in gas analysis equipment, for example, for regulating a carrier gas flow in a process gas chromatograph. Gas analysis equipment is often located in harsh environment where explosive gases may be present. Thus, safety precautions must be taken to prevent the gases from igniting. To that end, the one or more control apparatuses may be arranged in a pressurized enclosure that uses overpressure to prevent an explosive atmosphere from entering. Alternatively, the enclosure may be designed flameproof/explosion-proof to prevent an explosion occurring inside the enclosure from spreading and igniting the explosive atmosphere surrounding the enclosure.

A first piece of prior art can be found in US 2005/0279408 A1. Furthermore, the unpublished European Patent Application No. 18196354.7 discloses a fluid pressure control apparatus that is intrinsically safe. To this end, the solenoid valve has a rest position between opened and closed and is controlled to move in either of opposite directions from its rest position, thus reducing power consumption and heat generation. The electronic controller, the solenoid valve and the pressure sensor are arranged in an electronics housing or enclosure of, e.g., a process gas chromatograph. The fluid inlet, the fluid outlet and a fluid port to the atmosphere are realized on a connection manifold. A fluid interface in the form of another manifold provides fluidic connection between the valve and the pressure sensor and to the connection manifold.

The mentioned fluid interface poses several potential leakage sources inside the enclosure, which is not critical as long as nitrogen or helium are used as carrier gas or, more generally, as the gas whose pressure is to be controlled. If, however, hydrogen or another flammable or hazardous gas is used, it may become difficult and costly to meet the requirements of explosion protection.

According to the invention, this problem is reduced or substantially solved by the fluid pressure control apparatus defined in claim 1 or the gas chromatograph of claim 12.

Further embodiments of the invention are set forth in the remaining claims.

Thus, a subject of the invention is a fluid pressure control apparatus comprising:
- a proportional solenoid valve having a solenoid portion and a valve portion operatively connected between a fluid inlet and a fluid outlet,
- a pressure sensor fluidically coupled to the fluid outlet,
- an electronic controller adapted to receive a first signal from the pressure sensor, to receive a second signal corresponding to a pressure set point and to generate and output a control signal to the solenoid valve,
- a flameproof/explosion proof or pressurized/purged enclosure in which said electronic controller and at least the solenoid portion of the proportional solenoid valve are housed, and
- a manifold block that
   - covers and closes an opening of the enclosure to which it is mounted,
   - comprises, at a front side facing outside the enclosure, the fluid inlet port and the fluid outlet port,
   - has internal passageways adapted to connect the valve portion of the solenoid valve between the fluid inlet port and the fluid outlet port,
- the pressure sensor being arranged outside the enclosure and
- the first signal being conducted into the enclosure via a fluid-tight electrical feedthrough.

A subject of invention is also a gas chromatograph comprising at least one such fluid pressure control apparatus.

As the pressure sensor is arranged outside the enclosure and thus is separated from the inner of the enclosure, the number of potential leakage sources inside the enclosure is reduced to no more than the one between the solenoid valve and the manifold block.

If, additionally, the valve portion of the solenoid valve is accommodated in the manifold block, there will be no leakage source at all inside the enclosure. In this case, the valve portion of the solenoid valve is actuated by the solenoid portion inside the enclosure through an operational interface at a backside of the manifold block either by mechanical or magnetic force. Alternatively, the valve portion may be housed in the enclosure and permanently joined to the manifold block at a backside of it that faces inside the enclosure. The permanent joint is understood to be made not flexible or via plugs and sockets but by, e. g., welding or brazing so that the valve portion is an infallible containment system considered not to release flammable or hazardous gas into the electronics housing or enclosure.

The pressure sensor can be arranged outside both the enclosure and the manifold block, e. g., plugged at the front side of the manifold block or located in an equipment to which the pressure regulated gas is provided. Alternatively, the pressure sensor can be accommodated in the manifold block. In both cases, the gas-tight electrical feedthrough may be arranged in the manifold block.

If the cable or wire that carries the first signal runs outside the enclosure and the manifold block in a hazardous area where explosive gas or dust might be present, the cable or wire may be surrounded by an enclosure that provides a certain ingress protection level. In order to keep the effort involved to a minimum, the pressure sensor may be connected to the electronic controller through an intrinsic safety barrier inside the enclosure.

The manifold block is preferably one-piece and integrally formed.

The invention will now be described by way of example and with reference to the accompanying drawing, in which
- Fig. 1: illustrates a simplified schematic block diagram of a first exemplary fluid pressure control apparatus,
- Fig. 2: is a second exemplary embodiment of the fluid pressure control apparatus and
- Fig. 3: is a third exemplary embodiment of the fluid pressure control apparatus.

In the figures, identical or similar parts or components with the same or similar functions are provided with the same reference numerals. The drawings are schematic, not to scale and the relative dimensions of various elements in the drawings are not to scale.

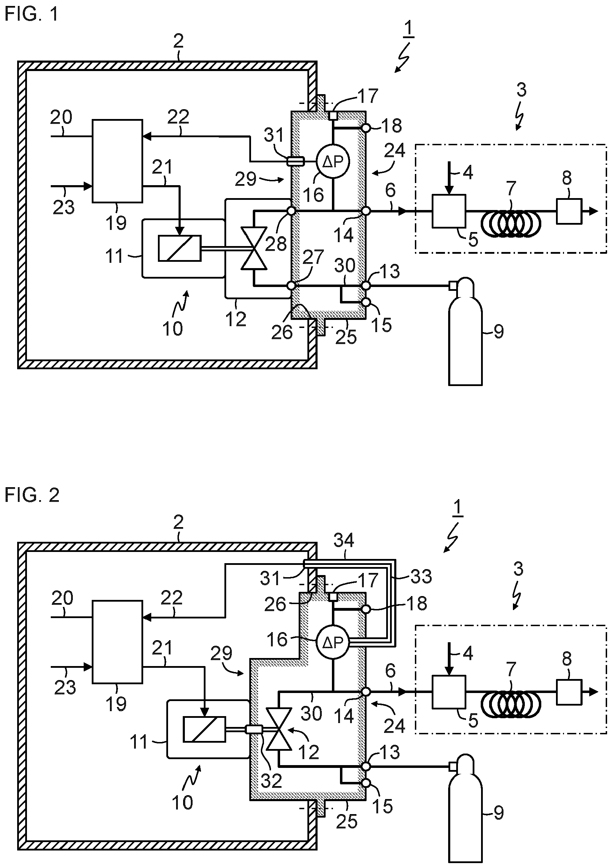

Fig. 1 illustrates a fluid pressure control apparatus 1 which is partially arranged in an electronics housing or enclosure 2 of, e. g., a process gas chromatograph 3 for analyzing a sample 4. The sample 4 is supplied to a dosing unit 5 for injecting a specified dose into a carrier gas stream 6. The most commonly used gases as carrier gas for gas chromatograph are nitrogen, hydrogen and helium. The carrier gas 6 transports the sample through one or several separation columns 7 where separation of the components of the sample 4 takes place. The gas components successively eluting from the column 7 are detected and quantitatively identified by a detector 8.

The carrier gas 6 is taken from a gas source 9, here a gas bottle. The fluid pressure control apparatus 1 serves to keep the pressure of the carrier gas 6 delivered to the gas chromatograph 3 at a predetermined level to provide an optimum performance over the operating target ranges. The pressure control apparatus 1 contains a proportional solenoid valve 10 that has a solenoid portion 11 and a valve portion 12. The valve portion 12 is operatively connected between a fluid inlet port 13 to which the gas source 9 is connected and a fluid outlet port 14 to which the dosing unit 5 of the gas chromatograph 3 is connected. The fluid inlet port 13 is in fluid communication with an additional fluid port 15 which allows connecting the fluid inlet port of a second fluid pressure control apparatus (not shown) to the gas source 9. A differential pressure sensor 16 measures the pressure of the carrier gas 6 at the fluid outlet port 14 against the atmospheric pressure. To that end, the pressure sensor 16 is fluidically coupled to the fluid outlet port 14 on one side and on the other side via an atmosphere inlet port 17 to the surrounding atmosphere. A reference pressure inlet port 18 allows alternatively connecting the pressure sensor 16 to a reference pressure source (not shown). All ports, e. g. 15, 18, which are not used, are closed.

The pressure control apparatus 1 further contains an electronic controller 19 which is powered via a line 20 and which generates and outputs a control signal 21 to the proportional solenoid valve 10 in dependence on a control deviation between a first signal 22 provided by the pressure sensor 16 and representative of the measured or sensed pressure and a pressure set point value 23.

The solenoid valve 10 and the electronic controller 19 are arranged inside the enclosure 2. As the gas chromatograph 3 may be located in a hazardous area where explosive gas or dust might be present, the enclosure 2 is designed explosion-proof or may be purged with air or an inert gas to prevent flammable gases from entering the enclosure and/or to dilute and disperse such gases as to render the gas mixture in the enclosure 2 non-explosive.

The ports 13, 14, 15, 17, 18 are realized as tube fittings on a front side 24 of a manifold block 25 that closes an opening 26 of the enclosure 2 to which it is mounted. The manifold block 25 further comprises fluid connectors 27, 28 on a backside 29 facing the inner of the enclosure 2 and internal passageways 30 which connect the fluid connector 27 to the fluid inlet port 13, the fluid connector 28 to the fluid outlet port 14 and further connect the differential pressure sensor 16 between the fluid outlet port 14 and the atmosphere and/or reference pressure inlet port 17, 18. While the pressure sensor 16 is accommodated inside the manifold block 25 and separated from the inner of the enclosure 2, the valve portion 12 of the solenoid valve 10 is arranged inside the enclosure 2 and permanently joined to the backside 29 of the manifold block 25, where the fluid connectors 27, 28 provide fluid passageways between the valve portion 12 and the manifold block 25. The joint is infallible and can be made by, e. g., welding or clamping.

The first signal 22 provided by the pressure sensor 16 is conducted to the electronic controller 19 in the enclosure 2 via a fluid-tight electrical feedthrough 31 in the manifold block 25.

Fig. 2 illustrates a second embodiment of the fluid pressure control apparatus 1 that mainly differs from that of Fig. 1 in that the valve portion 12 of the solenoid valve 10 is accommodated in the manifold block 25 and separated from the inner of the enclosure 2. The manifold block 25 comprises, at the backside 29, an operational interface 32 in the form of a positioning element between the valve portion 12 and the solenoid portion 11 of the solenoid valve 10.

Alternatively, the operational interface 32 may comprise a magnetic coupling, e. g., between a coil of solenoid portion 11 and a plunger of the valve portion 12.

The fluid-tight electrical feedthrough 31 is arranged in the wall of the enclosure 2. The cable 33 carrying the first signal 22 through the area outside the enclosure 2 is surrounded by an enclosure 34 that provides a certain ingress protection level.

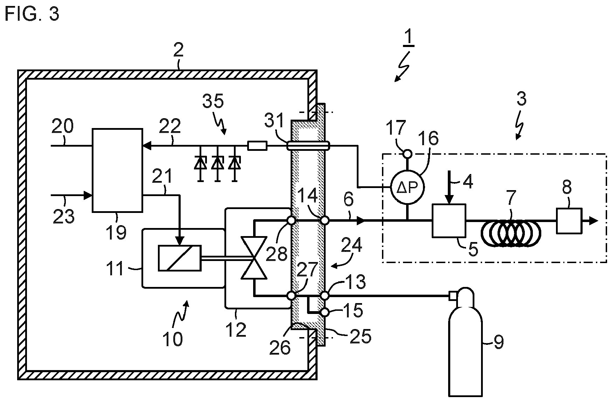

Fig. 3 illustrates a third embodiment of the fluid pressure control apparatus 1 that mainly differs from that of Fig. 1 in that pressure sensor 16 is arranged outside both the enclosure 2 and the manifold block 25. The pressure sensor 16 is connected to the electronic controller 19 through an intrinsic safety barrier 35 inside the enclosure 2.

## Claims

1. A fluid pressure control apparatus (1) comprising:
- a proportional solenoid valve (10) having a solenoid portion (11) and a valve portion (12) operatively connected between a fluid inlet (11) and a fluid outlet (12),
- a pressure sensor (16) fluidically coupled to the fluid outlet (12),
- an electronic controller (19) adapted to receive a first signal (22) from the pressure sensor (16), to receive a second signal (23) corresponding to a pressure set point and to generate and output a control signal (21) to the solenoid valve (10),
- a flameproof/explosion proof or pressurized/purged enclosure (2) in which said electronic controller (19) and at least the solenoid portion (11) of the proportional solenoid valve (10) are housed, and
- a manifold block (25) that
- covers and closes an opening (26) of the enclosure (2) to which it is mounted,
- comprises, at a front side (24) facing outside the enclosure (2), the fluid inlet port (13) and the fluid outlet port (14),
- has internal passageways (30) adapted to connect the valve portion (12) of the solenoid valve (10) between the fluid inlet port (13) and the fluid outlet port (14),
- the pressure sensor (16) being arranged outside the enclosure (2) and
- the first signal (22) being conducted into the enclosure (2) via a fluid-tight electrical feedthrough (31).

2. The fluid pressure control apparatus (1) of claim 1, wherein the pressure sensor (16) is arranged outside the manifold block (25).

3. The fluid pressure control apparatus (1) of claim 1, wherein the pressure sensor (16) is accommodated in the manifold block (25).

4. The fluid pressure control apparatus (1) of any one of the preceding claims, wherein the gas-tight electrical feedthrough (31) is arranged in the manifold block (25).

5. The fluid pressure control apparatus (1) of any one of the preceding claims, wherein the path of the first signal (22) outside the enclosure (2) and the manifold block (25) is arranged in an enclosure (34) designed to provide protection against ingress.

6. The fluid pressure control apparatus (1) of any one of the preceding claims, wherein the pressure sensor (16) is connected to the electronic controller (19) through an intrinsic safety barrier (35) inside the enclosure (2).

7. The fluid pressure control apparatus (1) of any one of the preceding claims, wherein the valve portion (12) of the solenoid valve (10) is housed in the enclosure (2) and permanently joined to the manifold block (25) at a backside (29) of it that faces inside the enclosure (2).

8. The fluid pressure control apparatus (1) of any one of claim 1 to 6, wherein the valve portion (12) of the solenoid valve (10) is accommodated in the manifold block (25) which, at a backside (29) facing inside the enclosure (2), comprises an operational interface (32) between the valve portion (12) and the solenoid portion (11).

9. The fluid pressure control apparatus (1) of claim 8, wherein the operational interface (32) comprises a positioning element.

10. The fluid pressure control apparatus (1) of claim 8, wherein the operational interface (32) comprises a magnetic coupling.

11. The fluid pressure control apparatus (1) of any one of the preceding claims, wherein the manifold block (25) is one-piece and integrally formed.

12. A gas chromatograph (3) comprising at least one at least one fluid pressure control apparatus (1) of one of the preceding claims.

## Patentansprüche

1. Fluiddrucksteuervorrichtung (1), Folgendes umfassend:
- ein Proportionalmagnetventil (10) mit einem Solenoidabschnitt (11) und einem Ventilabschnitt (12), der wirksam zwischen einem Fluideinlass (11) und einem Fluidauslass (12) angeschlossen ist,
- einen Drucksensor (16), der fluidisch mit dem Fluidauslass (12) gekoppelt ist,
- eine elektronische Steuervorrichtung (19), die eingerichtet ist, um ein erstes Signal (22) aus dem Drucksensor (16) zu empfangen, ein zweites Signal (23) entsprechend einem Solldruckwert zu empfangen und ein Steuersignal (21) an das Magnetventil (10) zu erzeugen und auszugeben,
- ein unentflammbares/explosionssicheres oder unter Druck stehendes/gespültes Gehäuse (2), in dem die elektronische Steuervorrichtung (19) und mindestens der Solenoidabschnitt (11) des Proportionalmagnetventils (10) untergebracht sind, und
- einen Verteilerblock (25), der
- eine Öffnung (26) des Gehäuses (2) abdeckt und verschließt, an dem er befestigt ist,
- an einer Vorderseite (24), die von dem Gehäuse (2) nach Außen zeigt, den Fluideinlassport (13) und den Fluidauslassport (14) umfasst,
- interne Durchgänge (30) aufweist, die eingerichtet sind, um den Ventilabschnitt (12) des Magnetventils (10) zwischen dem Fluideinlassport (13) und dem Fluidauslassport (14) anzuschließen,
- wobei der Drucksensor (16) außerhalb des Gehäuses (2) angeordnet ist und
- wobei das erste Signal (22) über eine fluiddichte elektrische Durchführung (31) in das Gehäuse (2) geleitet wird.

2. Fluiddrucksteuervorrichtung (1) nach Anspruch 1, wobei der Drucksensor (16) außerhalb des Verteilerblocks (25) angeordnet ist.

3. Fluiddrucksteuervorrichtung (1) nach Anspruch 1, wobei der Drucksensor (16) in dem Verteilerblock (25) untergebracht ist.

4. Fluiddrucksteuervorrichtung (1) nach einem der vorhergehenden Ansprüche, wobei die gasdichte elektrische Durchführung (31) in dem Verteilerblock (25) angeordnet ist.

5. Fluiddrucksteuervorrichtung (1) nach einem der vorhergehenden Ansprüche, wobei der Pfad des ersten Signals (22) außerhalb des Gehäuses (2) und der Verteilerblock (25) in einem Gehäuse (34) angeordnet sind, das ausgelegt ist, um Schutz gegen Eindringen bereitzustellen.

6. Fluiddrucksteuervorrichtung (1) nach einem der vorhergehenden Ansprüche, wobei der Drucksensor (16) durch eine intrinsische Sicherheitssperre (35) innerhalb des Gehäuses (2) hindurch an der elektronischen Steuervorrichtung (19) angeschlossen ist.

7. Fluiddrucksteuervorrichtung (1) nach einem der vorhergehenden Ansprüche, wobei der Ventilabschnitt (12) des Magnetventils (10) in dem Gehäuse (2) untergebracht ist und mit dem Verteilerblock (25) an einer Rückseite (29) davon, die zum Inneren des Gehäuses (2) zeigt, permanent verbunden ist.

8. Fluiddrucksteuervorrichtung (1) nach einem der Ansprüche 1 bis 6, wobei der Ventilabschnitt (12) des Magnetventils (10) in dem Verteilerblock (25) untergebracht ist, der an einer Rückseite (29), die zum Inneren des Gehäuses (2) zeigt, eine funktionsfähige Schnittstelle (32) zwischen dem Ventilabschnitt (12) und dem Solenoidabschnitt (11) umfasst.

9. Fluiddrucksteuervorrichtung (1) nach Anspruch 8, wobei die Betriebsschnittstelle (32) ein Positionierelement umfasst.

10. Fluiddrucksteuervorrichtung (1) nach Anspruch 8, wobei die Betriebsschnittstelle (32) eine magnetische Koppelung umfasst.

11. Fluiddrucksteuervorrichtung (1) nach einem der vorhergehenden Ansprüche, wobei der Verteilerblock (25) einteilig ist und integral ausgebildet ist.

12. Gaschromatograph (3), mindestens eine Fluiddrucksteuervorrichtung (1) nach einem der vorhergehenden Ansprüche umfassend.

## Revendications

1. Installation (1) de commande de la pression d'un fluide comprenant :
- une électrovanne (10) proportionnelle ayant une partie (11) d'électroaimant et une partie (12) de vanne reliée fonctionnellement entre une entrée (11) de fluide et une sortie (12) de fluide,
- un capteur (16) de pression communiquant fluidiquement avec la sortie (12) de fluide,
- une unité (19) électronique de commande conçue pour recevoir un premier signal (22) du capteur (16) de pression, pour recevoir un deuxième signal (23) correspondant à un point de consigne de pression et pour produire et sortir un signal (21) de commande de l'électrovanne (10),
- une enceinte (2) à l'épreuve du feu et/ou à l'épreuve de l'explosion ou sous pression / purgée, dans laquelle l'unité (19) électronique de commande et au moins la partie (11) d'électroaimant de l'électrovanne (10) proportionnelle sont logées, et
- un bloc (25) de raccordement qui
- recouvre et ferme une ouverture (26) de l'enceinte (2) sur laquelle il est monté,
- comprend, du côté (24) avant faisant face vers l'extérieur de l'enceinte (2), l'orifice (13) d'entrée de fluide et l'orifice (14) de sortie de fluide,
- a des passages (30) intérieurs conçus pour mettre à la partie (12) de vanne de l'électrovanne (10) entre l'orifice (13) d'entrée de fluide et l'orifice (14) de sortie de fluide,
- le capteur (16) de pression étant monté à l'extérieur de l'enceinte (2) et
- le premier signal (22) étant conduit dans l'enceinte (2) par l'intermédiaire d'une traversée (31) électrique étanche au fluide.

2. Installation (1) de commande de la pression fluide suivant la revendication 1, dans laquelle le capteur (16) de pression est disposé à l'extérieur du bloc (25) de connexion.

3. Installation (1) de commande de la pression de fluide suivant la revendication 1, dans laquelle le capteur (16) de pression est logé dans le bloc (25) de connexion.

4. Installation (1) de commande de la pression de fluide suivant l'une quelconque des revendications précédentes, dans laquelle la traversée (31) électrique étanche au gaz est disposée dans le bloc (25) de connexion.

5. Installation (1) de commande de la pression de fluide suivant l'une quelconque des revendications précédentes, dans laquelle le trajet du premier signal (22) à l'extérieur de l'enceinte (2) et du bloc (25) de connexion est disposé dans une enceinte (34) conçue pour fournir une protection à l'intrusion.

6. Installation (1) de commande de la pression de fluide suivant l'une quelconque des revendications précédentes, dans laquelle le capteur (16) de pression est relié à l'unité (19) électronique de commande par l'intermédiaire d'une barrière (35) de sécurité intrinsèque à l'intérieur de l'enceinte (2).

7. Installation (1) de commande de la pression de fluide suivant l'une quelconque des revendications précédentes, dans laquelle la partie (12) de vanne de l'électrovanne (10) est logée dans l'enceinte (2) et reliée en permanence au bloc (25) de connexion d'un côté (29) arrière de celui-ci qui fait face à l'intérieur de l'enceinte (2).

8. Installation (1) de commande de la pression de fluide suivant l'une quelconque des revendications 1 à 6, dans laquelle la partie (12) de vanne de l'électrovanne (10) est logée dans le bloc (25) de connexion qui, d'un côté (29) arrière faisant face à l'intérieur de l'enceinte (2), comprend une interface (32) opérationnelle entre la partie (12) de vanne et la partie (11) d'électroaimant.

9. Installation (1) de commande de la pression de fluide suivant la revendication 8, dans laquelle l'interface (32) opérationnelle comprend un élément de mise en position.

10. Installation (1) de commande de la pression de fluide suivant la revendication 8, dans laquelle l'interface (32) opérationnelle comprend un couplage magnétique.

11. Installation (1) de commande de la pression de fluide suivant l'une quelconque des revendications précédentes, dans laquelle le bloc (25) de connexion est formé d'une seule pièce et de manière intégrale.

12. Chromatographe (3) en phase gazeuse comprenant au moins une installation (1) de commande de la pression d'un fluide suivant l'une des revendications précédentes.
